(19) Europäisches Patentamt
European Patent Office
Office européen des brevets

(11) Publication number: 0 326 895 A2

# (12) EUROPEAN PATENT APPLICATION

(21) Application number: 89101108.2

(22) Date of filing: 23.01.89

(51) Int. Cl.[4]: C08L 71/04 , C08L 23/00 , C08L 53/02

(30) Priority: 03.02.88 US 151753

(43) Date of publication of application: 09.08.89 Bulletin 89/32

(84) Designated Contracting States: DE FR GB IT NL

(71) Applicant: GENERAL ELECTRIC COMPANY
1 River Road
Schenectady New York 12305(US)

(72) Inventor: Wang, I-Chung Wayne
30 McCauley Lane
Williamstown Massachusetts 01267(US)
Inventor: Campbell, John Robert
41 Pepper Hollow
Clifton Park New York 12065(US)
Inventor: Shea, Timothy John
1085 Keyes Avenue
Schenectady New York 12309(US)

(74) Representative: Catherine, Alain
General Electric France Service de Propriété Industrielle 18 Rue Horace Vernet B.P. 76
F-92134 Issy-les-Moulineaux Cédex(FR)

## (54) Compatibilized thermoplastic blends of polyphenylene ether and polyolefin.

(57) Thermoplastic blends are provided of polyphenylene ether, polyolefin such as low density polyethylene, and a hydrogenated diblock of polybutadiene and polystyrene. The aforementioned thermoplastic blends exhibit a reduced tendency to delaminate and an improved impact strength.



Xerox Copy Centre

# COMPATIBILIZED THERMOPLASTIC BLENDS OF POLYPHENYLENE ETHER AND POLYOLEFIN

## BACKGROUND OF THE INVENTION

Prior to the present invention, polyphenylene ethers, as shown by Hay, U.S. Patent Nos. 3,306,874 and 3,306,875, were recognized as high performance engineering thermoplastics useful for many commercial applications. However, it was found that parts molded from the polyphenylene ethers were often brittle due to poor impact strength. In addition, melt processing of the polyphenylene ether is commercially unattractive because high temperatures are required to soften the resin.

Improvements in the processing of polyphenylene ethers have been achieved by blending the polyphenylene ether with a polystyrene homopolymer as shown by Sizek, U.S. Patent No. 3,383,435. Rubber-modified polystyrene resins also have been found to be combinable in all proportions to achieve many process and property improvements in the resulting blend over the original polyphenylene ether.

Further improvements in polyphenylene ether blends are shown by Lee, U.S. Patent No. 4,242,263, which utilizes a synergistic impact strength improving combination comprising a polyolefin resin and an elastomeric ABA-block copolymer of a vinyl aromatic compound and a conjugated diene which, optionally, can be hydrogenated. In addition to the aforementioned hydrogenated triblock, the compositions of Lee also can use a plasticizer to enhance mixing and prevent preferential association of regions of the same polymer. In addition to the aforementioned plasticizer, polyolefin resin, and elastomeric block copolymer, the compositions of Lee also can contain a styrene homopolymer or random copolymer resin. Although improved results have been achieved in Lee's polyphenylene ether blends with respect to impact strength as a result of the use of the aforementioned elastomeric block copolymer, the compositions of Lee do not provide for optimum compatibility between the polyolefin component and the polyphenylene ether. This can result in delamination and a reduction in the physical properties of the blend, as well as an alteration in blend appearance. The term "delamination", as used hereinafter, means a gross phase separation of blend components that is visible to the naked eye as a result of layering of agglomerated particles of the blend. The resulting layers of discontinuous phase can visibly alter blend appearance leading to a reduction in predictable physical performance and a high risk of separation at the layered interface during molding.

The present invention is based on our discovery that blends of polyphenylene ether and polyolefin can be made exhibiting a significant improvement in impact strength and a reduced tendency toward delamination by incorporating into the blend of polyphenylene ether and polyolefin, an effective amount of a "compatibilizer" in the form of a hydrogenated diblock copolymer of styrene and butadiene having less than about 15 mole % of vinyl side-chain prior to hydrogenation.

## STATEMENT OF THE INVENTION

There is provided by the present invention extrudable thermoplastic blends having a reduced tendency to delaminate comprising polyphenylene ether, polyolefin, and an effective amount of a hydrogenated polybutadiene-polystyrene diblock copolymer having less than about 15 mole % of vinyl side-chain prior to hydrogenation.

The polyphenylene ethers which can be utilized in the practice of the present invention include polyphenylene ethers comprising a plurality of structural units having the formula,

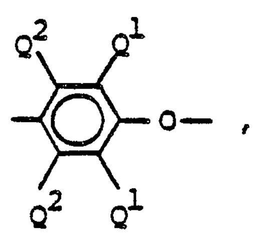

where in each of said units, independently, each $Q^1$ is halogen, primary or secondary lower alkyl (i.e., alkyl containing up to 7 carbon atoms), phenyl, haloalkyl, aminoalkyl, hydrocarbonoxy, or halohydrocarbonoxy

wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as define for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Both homopolymer and copolymer polyphenylene ethers are known. The homopolymers include those containing, for example, 2,6-dimethyl-1,4-phenylene ether units. The copolymers include random copolymers containing such units in combination with (for example) 2,3,6-trimethyl-1, 4-phenylene ether units. Many suitable random copolymers, as well as homopolymers, are disclosed in the patent literature.

Also known are polyphenylene ethers containing moieties which modify properties such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other polyphenylene ethers are coupled polymers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

Polyphenylene ethers comprising the chemically combined units, shown by the above formula, are typically prepared by the oxidative coupling of at least one corresponding monohydroxyaromatic compound. Particularly useful and readily available monohydroxyaromatic compounds are 2,6-xylenol (wherein each $Q^1$ is methyl and each $Q^2$ is hydrogen), whereupon the polymer may be characterized as a poly(2,6-dimethyl-1,4-phenylene ether), and 2,3,6-trimethylphenol (wherein each $Q^1$ and one $Q^2$ is methyl and the other $Q^2$ is hydrogen).

A variety of catalyst systems are known for the preparation of polyphenylene ethers by oxidative coupling. For the most part, they contain at least one heavy metal compound such as a copper, manganese or cobalt compound, usually in combination with various other materials.

Catalyst systems containing a copper compound are disclosed, for example, in U.S. Patent Nos. 3,306,874, 3,306,875, 3,914,266 and 4,028,341. They are usually combinations of cuprous or cupric ions, halide (i.e., chloride, bromide or iodide) ions and at least one amine.

Other catalyst systems contain manganese compounds. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also known are cobalt-containing catalyst systems. Suitable manganese and cobalt-containing catalyst systems for polyphenylene ether preparation are known in the art by reason of disclosure in numerous patents and publications.

The polyolefin resin which can be used in the practice of the present invention include linear low-density polyethylene (LLDPE), and low density, medium density and high density polyethylenes. Linear low density polyethylene as prepared by low pressure, gas phase fluid bed reactors and low density polyethylene prepared by liquid phase reactors are within the scope of this invention and typically have densities of about 0.916-0.920 g/cc. Medium and high density polyethylenes with densities of about 0.920-0.945 and 0.945-0.955, respectively, are also within the scope of this invention.

In addition to polyethylene, there also can be utilized polypropylene as the polyolefin component, preferably in combination with an impact modifier, such as Shell Chemical Company, Kraton resin (KG1651) which is a copolymer of styrene and butadiene. The polypropylenes utilized in the practice of the invention can be more particularly defined as polypropylenes which have high melting points of 150-175 °C although resins with lower tacticities and melting points can be used.

The compatibilizer utilized in the practice of the present invention is a poly(hydrogenated butadiene)-polystyrene diblock copolymer as described by R. Fayt et al., Journal Polymer Science; Polymer Letter Edition 19, 79 (1981). The diblock copolymer useful in the composition of this invention consists of an A-block of polymerized monovinylarene and a B-block, prior to hydrogenation, of polymerized conjugated diene. The monovinylarene monomers of the A-block are generally those containing from 8 to about 20 carbon atoms per molecule. Examples of specific monovinylarene monomers include styrene, 2-methylstyrene, p-vinyltoluene, p-t-butylstyrene, and the like, and mixtures thereof. Presently preferred is styrene

due to its availability. The conjugated dienes which are employed with the above-described monovinylarene for forming the diblock copolymers, prior to hydrogenation, include those containing from 4 to about 12 carbon atoms per molecule, preferably those containing 4 to about 8 carbon atoms per molecule. Specific examples of useful conjugated dienes are 1,3-butadiene, isoprene, 2,3-dimethyl-1,3-butadiene, piperylene, 3-butyl-1,3-octadiene, 2-phenyl-1,3-butadiene, and the like, and mixtures thereof. Especially preferred is 1,3-butadiene due to its availability and favorable cost.

The diblock copolymers suitable for use in the blend of this invention will generally contain the unhydrogenated version of the conjugated diene and monovinylarene in the amounts within the range of about 20:80 to about 80:20 parts by weight of conjugated diene to monovinylarene, preferably about 40:60 to 60:40. The diene block, prior to hydrogenation, generally contains less than 15 mole %, and preferably less than 10 mole %, of vinyl side-chains along the B-block backbone.

Any organomonolithium initiator known in the art can be used to produce the diblock copolymers suitable for use in this invention after selectively hydrogenating the diene block. The amount of initiator used will be varied, depending upon the desired molecular weight of the resultant copolymer. The diblock copolymers suitable for use in this invention can vary broadly from about 50,000 number average molecular weight up to 1,000,000 or more. However, the preferably diblock copolymer will have a number average molecular weight of about 50,000 to 400,000. The initiator levels useful in preparing the preferred molecular weight are generally in the range of about .25 to 2.0 millimoles per 100 grams of total monomers.

A polar compound, such as acrylic or cyclic ethers or tertiary amines, is preferably employed in the polymerization of the conjugated diene and monovinylarene in order to increase the rate of polymerization, but not to increase the vinyl side groups of the diene units more than 15 mole %. Diethyl ether, THF and tetramethylethylenediamine are among those frequently used in amounts ranging from about .001 to about 5 parts by weight per 100 parts by weight of monomers.

The polymerization process is generally carried out in a hydrocarbon diluent at temperatures in the range of about 20 °C to 125 °C under positive pressure by the addition of an inert gas or only the vapor pressures of the components of the reaction system. Common diluents which are well-known in the art to be useful in solution polymerization processes include n-hexane, n-heptane, cyclohexane, cyclopantane, benzene and toluene, and mixtures thereof. Care must be taken to exclude moisture or oxygen from the polymerization system. The incremental addition of A-block monomer which, after completion of the polymerization, is then followed by the addition of the B-block monomer is commonly practiced by the living anionic polymerization techniques for pure diblock copolymer. The two monomers if copolymerized simultaneously under same conditions aforementioned, due to the reactivity difference between the styrene and the diene monomer, will produce a "tapered" diblock copolymer. The resultant diblock copolymers are then isolated by any suitable means well-known in the art, such as coagulation by alcohol or steamstripping of volatiles, followed by appropriate drying procedures. Before isolation, an antioxidant stabilizer, such as BHT or Irganox, can be added to prevent any degradation during heat induced drying procedure.

The diblock copolymers suitable for use in this invention include those in which the poly(conjugated diene) block can be partially hydrogenated or completely hydrogenated. Presently preferred are those diblock copolymers which have been hydrogenated, such that at least about 90 mole percent of the olefinic unsaturation has been removed without removing substantial amounts of aromatic unsaturation. Hydrogenation can be effected in the presence of a variety of catalyst systems of either the heterogeneous or homogeneous type. Examples of suitable heterogeneous catalysts include nickel on kieselguhr, Raney nickel, copper-chromium oxide, molybdenum sulfide, and finely divided platinum or noble metals on suitable carriers. Homogeneous catalysts are preferred, however, and the latter can be prepared by reducing a cobalt, nickel, or iron carboxylate or alkoxide with an alkyl aluminum compound. An example of a preferred homogeneous catalyst is that formed through the reduction of cobalt octoate (or nickel carboxylate) by triethylaluminum. The polymer, preferably in solution in an inert solvent, is contacted with the catalyst under conditions which include temperature in the range from about 0 to about 250 °C and pressurization with hydrogen up to a total pressure of about 10,000 psi. The hydrogenation time can vary from about 1 minute to about 25 hours. The preferred conditions involve temperature of about 10 to about 150 °C, pressures of about 10 to about 1,500 psi and reaction time of about 10 minutes to about 10 hours.

Following the hydrogenation, the reaction mixture can be isolated by conventional techniques or "reverse" coagulation procedure to remove the catalyst residues. After completely drying under reduced pressure, the diblock copolymers, either pure or tapered, made of (hydrogenated polydiene)-(polystyrene) are thus suitable as the compatibilizers in the present invention.

The extrudable thermoplastic blends of the present invention can be made by dry blending polyphenylene ether, polyolefin and the compatibilizer to produce a homogenous mixture. There can be utilized, per 100 parts by weight of the polyphenylene ether, 50 to 900 parts of the polyolefin and 5 to 250 parts of

the compatibilizer. Preferably, there can be utilized, per 100 parts by weight of the polyphenylene ether, 50 to 900 parts of polyethylene and 5 to 250 parts of compatibilizer, or 50 to 900 parts of polypropylene and 5 to 250 parts of compatibilizer and optionally 5 to 250 parts of impact modifier. Especially preferred compositions are combinations of polyethylene and poly)2,6-dimethyl-1,4-phenylene)ether.

Other additives may be present in the extrudable thermoplastic blends of the present invention, such as polystyrene, HIPS, fillers such as silica filler, glass fiber, carbon fiber, pigments, flame retardants, and stabilizers in amounts varying between about 0.1 to 30% by weight of the total composition.

The following examples are given by way of illustration and not by way of limitation. All parts are by weight.

## EXAMPLE 1

There was added 50 parts of 1,3-butadiene to a dry solution of 780 parts of cyclohexane, 0.05 part of tetrahydrofuran, and about 0.25-2.0 millimole of n-butyllithium. After three hours at 50° C, a quantitative polymerization of the butadiene was effected. There was then added to the mixture, 50 parts of styrene which was allowed to polymerize for one hour to produce pure di-block copolymer. The molecular weight of the butadiene block varied in the range of from 25,000 to 200,000 and the polystyrene block varied in the range of from 25,000 to 200,000, based on the amount of n-butyllithium used in the polymerization mixture.

The same procedure was followed except that the butadiene and styrene were simultaneously copolymerized at 50° C for five hours. There was obtained tapered block copolymers which have a mid-region of mixed butadiene and styrene composition. The structure of the resultant tapered block copolymer can be schematically designated as BBBB/SSBS/SBSB/BSBB/SSSS, where S and B are styrene and butadiene domains respectively.

The above pure and tapered living polymer solutions can be quenched by addition oxygen-free alcohol containing one part of butylated hydroxytoluene (BHT). The respective copolymers can be isolated by coagulation and dried at 50° C under vacuum over a period of about eight hours.

Compatibilizer was made by hydrogenating a mixture of 80 parts of butadiene styrene diblock, 2.4 liters of cyclohexane, and ~20 mL of a catalyst, made by reacting 95 parts of triethylaluminum with 90.4 parts of a cobalt salt of 2-ethylhexanoic acid. The hydrogenation was conducted at a pressure of 750 psi of hydrogen at a temperature of about 50° C over a period of about 1 hour. Recovery of the hydrogenated block copolymer was achieved by reverse coagulation of the reaction mixture using acidified methanol. Based on method of preparation, the resulting block copolymer consisted of a polyethylene block having less than about 10 mole % of vinyl side-chain resulting from greater than about 90 mole % of 1,4-butadiene addition during anionic polymerization and a polystyrene block. Variations in the block copolymer were obtained depending upon whether monomer addition in cyclohexane was step-wise or simultaneous.

A dry blend of 50 parts of poly(2,6-dimethyl-1,4-phenylene)ether having an intrinsic viscosity in chloroform of 0.45 at 25° C, 50 parts of linear low density polyethylene (LLDPE) and 10 parts of compatibilizer was mixed on a jar-mill to give a homogeneous powder dispersion. The dry blend was then extruded on a Welding-Engineer's 0.8 inch twin extruder under the following conditions:

| | | |
|---|---|---|
| screw speed | : | 400 rpm |
| Zones 1-4, die | : | 525° F |
| Zone 5 | : | 350° F |
| Zone 6 | : | 200° F |

The extrudata was pelletized, dried at 140° F and then injection molded on a 28-ton Engle molding machine. In addition to polyethylene, there also was formed compatibilized blends of polyphenylene ether and polypropylene. In addition to the diblock compatibilizer of the present invention, there also were blends utilizing KG1651 or Kraton-G 1651 of the Shell Chemical Company, which is a hydrogenated tri-block copolymer having styrene (ethylene-butylene)styrene blocks. This hydrogenated commercially available triblock copolymer consists of blocks of styrene(ethylene-butylene)styrene and has more than about 20 mole % of vinyl side-chain prior to hydrogenation.

As used hereinafter, the expression "tapered" poly(hydrogenated butadiene)polystyrene copolymer or "pure" poly(hydrogenated butadiene)polystyrene copolymer is based on the order of addition of the butadiene and styrene into the anionic polymerization mixture. The above-described anionic polymerization and hydrogenation procedure for making the diblock of the present invention in either a tapered or pure

form was used to prepare several diblock compatibilizers which subsequently were used in the preparation of compatibilized blends of the present invention. In this way, copolymers of well-defined block integrity, controlled molecular weight, narrow dispersity and fixed composition can be readily obtained. Anionic polymerization in a non-polar solvent allowed control of the microstructure of the polydiene segment as shown by the following table:

TABLE I

| Polybutadiene-Polystyrene Block Copolymers | | | | | |
|---|---|---|---|---|---|
| | | Copolymer Molecular Weight | | | |
| | | UV Detector | | RI Detector | |
| Entry | Block Structure* | Mn (x $10^{-3}$ ) | Mw/Mn | Mn (x $10^{-3}$ ) | Mw/Mn |
| 1 | Tapered** | 108 | 1.08 | -- | -- |
| 2 | Tapered** | 163 | 1.10 | 158 | 1.11 |
| 3 | Tapered** | 191 | 1.10 | 187 | 1.10 |
| 4 | Pure*** | 117 | 1.08 | 111 | 1.10 |
| 5 | Pure*** | 156 | 1.08 | 147 | 1.10 |
| 6 | Pure*** | 203 | 1.10 | 190 | 1.13 |

* Butadiene-styrene ratio is 49.5/50.5 and 50/50 for Entries 1-3 and 4-6, respectively.

** Microstructure of butadiene-rich segment is 85% 1,4 addition, 6.8% 1,2 addition and 8.2% styrene (up to 31% conversion).

*** Microstructure of butadiene segment is 91% 1,4 addition and 9% 1,2 addition.

where "UV Detector" means ultraviolet light detector and "RI Detector" means refractive index detector.

The diene segment of the copolymers listed in Table I were then hydrogenated in accordance with the afore-described procedure to produce poly(hydrogenated-butadiene)styrene copolymers or "compatibilizers" as shown by the following table:

TABLE II

| Poly(hydrogenated-butadiene)-Styrene Copolymers | | | | | |
|---|---|---|---|---|---|
| | DSC Analyses | | GPC Molecular Weight* | | |
| Table 1 Entry | Tg( °C) | Tm( °C) | Mn (x $10^{-3}$) | Mw (x $10^{-3}$ ) | Mw/Mn |
| 1 | 38.5 | 74,83 | 101 | 110 | 1.09 |
| 2 | -- | -- | -- | -- | -- |
| 3 | -- | 84 | 141 | 171 | 1.21 |
| 4 | -- | 100 | 80 | 95 | 1.19 |
| 5 | -- | 99.9 | 105 | 125 | 1.19 |
| 6 | -- | 99.3 | ca. 200** | -- | -- |

* As measured at 140 °C in 1,2,4-trichlorobenzene using a refractive index detector against polystyrene standards.

** Inferred from precursor value as essentially no degradation occurs on hydrogenation.

Hydrogenation of the diene segment of the copolymers listed in Table I affords a saturated semicrystalline olefin block which closely resembles linear low density polyethylene. The hydrogenated pure diblock copolymers of Table II (Entry 4-6) show a sharp melting endotherm of 100 °C as clearly detected by DSC; whereas, the hydrogenated tapered diblock materials show somewhat less crystallinity with melting peak in

the range of 60-90° C.

Blends of polyphenylene ether (PPE), polyolefin and Table II compatibilizers were mixed in a jar-mill to give a homogeneous powdered dispersion as previously described. Equal part blends of poly(2,6-dimethyl-1,4-phenylene)ether having an intrinsic viscosity of 0.45 in chloroform at 25° C and equal parts of linear low density polyethylene LLDPE of the Union Carbide Company, No. 7341, were blended with 10 parts by weight based on 100 parts of the polyphenylene ether-polyolefin blend of compatibilizers of the present invention and commercially available Kraton G1651 hydrogenated tri-block copolymer of the Shell Chemical Company to determine Izod impact values and degree of delamination. The following results were obtained where blends of polyphenylene ether and polyolefin, "PPE/PO blends" are blends of equal parts of polyphenylene ether and LLDPE:

TABLE III

| PPE/PO Blends | | |
|---|---|---|
| Copolymer (pbw)* | Material Property | |
| | Izod + | Delamination** |
| -- | 0.6 | Some |
| Table II, Entry 1 (10) | 8.2 | Slight |
| KG1651 (10)*** | 6.0 | Slight-Some |
| Table II, Entry 4 (10) | 11.6 | Slight |
| " " (6) (10) | 12.3 | None |

* All blends contain PPE:LLDPE (50/50).

** As determined by visual inspection of fracture surfaces.

*** Kraton G1651 is a triblock copolymer having styrene-(ethylene-butylene)-styrene block compositions.

\+ Units are ft/lbs/inch of notch as measured on 1/8" bars.

The above results show that the hydrogenated diblock copolymers of the present invention provide blends of polyphenylene ether and polyolefin having significantly improved impact values and resistance to delamination as compared to the commercially available hydrogenated triblock (KG1651). Examination of the degree of delamination was also confirmed by scanning electron microscopy using a model SMS22 of the ISI Company.

EXAMPLE 2

In accordance with the procedure of Example 1, compatibilized blends of polyphenylene ether (PPE) and polypropylene were prepared. The polypropylene used was Shell product No. 5820 and Shell product No. 5225. The blends were equal parts of polyphenylene ether and polypropylene and 10 parts of compatibilizer based on 100 parts of the polyphenylene ether polypropylene blend. The compatilibized blends were then evaluated as in Example 1 for delamination and Izod impact in accordance with ASTM D256. The following results were obtained where PPE is as previously defined and "PP" is polypropylene:

TABLE IV

| PPE/PP Blends | | |
|---|---|---|
| Copolymer (PBW) | Properties | |
| | Izod** | Delamination |
| -- (0) | 0.3 | Some |
| KG 1651 (10) | 0.7 | Some |
| Table II, Entry 1 (10) | 1.6 | Slight |
| " " 6 (10) | 1.4 | None |

* Polypropylene grade used in Entries 1-2, is Shell #5820 and in Entries 1 (repeat blend), 3-4 is Shell #5225.
** Units are ft. lb/in of notch.

The above results show that improved resistance to delamination and impact strength are obtained when the diblock compatibilizer is employed with the polyphenylene ether (PPE)/polypropylene blends, as compared to the same blend with equal part blends of polyphenylene ether and polypropylene employing KG1651 triblock.

EXAMPLE 3

In accordance with the procedure of Example 2, polyphenylene ether and polypropylene blends were prepared utilizing 10-15 parts of poly(hydrogenated-butadiene)-polystyrene copolymer, per 100 parts of polyphenylene ether polypropylene blend. The copolymer compatibilizer was obtained by the procedure of Example 1 having a $M_n$ equal to 170-210 (x $10^{-3}$) having a butadiene-styrene ratio of 50/50 and a microstructure of butadiene of 90% 1,4 addition and 10% of 1,2 addition. There was utilized a ratio of 30-40 parts of polyphenylene ether and 60-70 parts of polypropylene which was Shell No. 5225. In addition to the compatibilizer of the present invention, there was used from 10-15 parts of an impact modifier KG1651 of the Shell Chemical Company in the form of a triblock of polystyrene-poly(ethylene)butylene(polystyrene). The following results were obtained where PPE and PP are as previously defined:

TABLE V

| PPE/PP Blends* | | | | |
|---|---|---|---|---|
| PPE/PP Ratio** | Copolymer (PBW)*** | Impact Modifier (pbw) + | Material Property | |
| | | | Izod + + | Delamination + + + |
| 40/60 | Table II, Entry 6 (10) | 10 | 1.7 | Slight |
| 40/60 | " " (15) | 10 | 2.9 | Slight |
| 40/60 | " " (15) | 15 | 6.4 | None |
| 30/70 | " " (10) | 10 | 2.8 | None |

* All blends are prepared according to the procedures outlined herein.
** Polypropylene grade used is Shell #5225.
*** Poly(hydrogenated-butadiene)-polystyrene copolymer is obtained by the procedure outlined herein: $M_w$ = 170-210 (x $10^{-3}$), butadiene-styrene ratio is 50/50, microstructure of butadiene egment is ~ 90% 1,4 addition and 10% 1,2 addition.
+ Impact Modifier is KG 1651 which has a triblock polystyrenepoly(ethylene-butylene)-polystyrene structue.
+ + Units are ft/lbs/inch of notch as measured on 1/8" bars.
+ + + As determined by visual inspection of fracture surfaces.

The above results show that improved impact values are achieved without sacrifice of resistance to delamination by employing an impact modifier in combination with the compatibilizer as well as changing the ratio of the polyphenylene ether to polypropylene.

EXAMPLE 4

Blends were prepared of equal parts of polyphenylene ether and linear low density polyethylene (LLDPE) or high density polyethylene (HDPE) in combination with 10-15 parts per 100 parts of the polyphenylene ether-polyethylene blend of diblock copolymer made in accordance with the practice of the present invention and KG1702, a diblock copolymer of Shell Chemical Company having a polystyrene-poly-(ethylene-propylene) block structure. The linear low density polyethylene was Union Carbide No. 7341 and the high density polyethylene which was used was USI Chemical Company No. LB83200. The diblock copolymer of the present invention was obtained by the procedure of Example 1 having an $M_n$ equal to 170-210 (x $10^{-3}$), butadiene-styrene ratio of 50/50 and a microstructure of butadiene segment having about 90% 1,4 addition and 10% 1,2 addition. The following results were obtained where PPE is as previously defined and PE is polyethylene:

TABLE VI

| PPE/PE Blends* | | | | |
|---|---|---|---|---|
| | | Material Properties | | |
| Polyethylene** | Copolymer (PBW)*** | HDT (°F) + | Izod + + | Delamination + + + |
| LLDPE | Table II, Entry 6 (10) | 163 | 12.3 | None |
| HDPE | " " (15) | 200 | 10.2 | None |
| HDPE | KG 1702 (15) | 154 | 5.2 | Yes |

* All blends are prepared according to the procedures outlined herein. PPE/LLDPE ratio is 50/50. PPO/HDPE ratio is 40/60.

** LLDPE grade is Union Carbide #7341. HDPE grade is USI #LB83200.

*** Poly(hydrogenated-butadiene)-polystyrene copolymer is obtained by the procedure outlined herein: $M_w$ = 170-210 (x $10^{-3}$), butadiene-styrene ratio is 50/50, microstructure of butadiene egment is ~ 90% 1,4 addition and 10% 1,2 addition. KG 1702 is a commercial polystryene-poly(ethylene-propylene) diblock copolymer.

\+ HDT measurements performed on 1/8" bars at 66 psi.

\+ + Units are ft/lbs/inch of notch as measured on 1/8" bars.

\+ + + As determined by visual inspection of fracture surfaces.

The above results show that polyphenylene ether/polyethylene blends having a higher heat distortion can be obtained by using high density polyethylene. In addition, improved Izod impact values and resistance to delamination is obtained by employing the copolymer of the present invention as compared to the prior art KG1702.

Although the above examples are directed to only a few of the very many variables which can be used in the practice of the present invention, it should be understood that the present invention is directed to a much broader variety of polyphenylene ether/polyolefin blends employing a diblock compatibilizer made in accordance with the practice of the present invention which is shown in the description preceding these examples.

## Claims

1. Extrudable thermoplastic blends having a reduced tendency to delaminate comprising polyphenylene ether, polyolefin, and an effective amount of a hydrogenated polybutadiene-polystyrene diblock copolymer having less than about 15 mole % of vinyl side-chain prior to hydrogenation.

2. Extrudable thermoplastic blends in accordance with claim 1, where the polyphenylene ether is poly-(2,6-dimethyl-1,4-phenylene)ether.

3. Extrudable thermoplastic blends in accordance with claim 1, containing polystyrene or high impact polystyrene.

4. Extrudable thermoplastic blends in accordance with claim 1, where the polyolefin is low density polyethylene.

5. Extrudable thermoplastic blends in accordance with claim 1, where the polyolefin is high density polyethylene.

6. Extrudable thermoplastic blends in accordance with claim 1, where the polyolefin is linear low density polyethylene.

7. Extrudable thermoplastic blends in accordance with claim 1, where the polyolefin is medium density polyethylene.

8. Extrudable thermoplastic blends in accordance with claim 1, where the olefin is polypropylene in combination with an impact modifier.

9. Extrudable thermoplastic blends in acordance with claim 1, where the olefin is polypropylene.